# EUROPÄISCHE PATENTSCHRIFT

(11) **EP 3 211 838 B1**
(45) Veröffentlichungstag und Bekanntmachung des Hinweises auf die Patenterteilung: **29.08.2018**
(21) Anmeldenummer: 16157779.6
(22) Anmeldetag: 29.02.2016
(51) Int. Cl.: H04L 12/46, H04W 84/12, H04L 12/931

(54) **REDUNDANT BETREIBBARES INDUSTRIELLES KOMMUNIKATIONSSYSTEM, VERFAHREN ZU DESSEN BETRIEB UND FUNK-TRANSCEIVER-STATION**
REDUNDANT INDUSTRIAL COMMUNICATION SYSTEM, METHOD OF OPERATING SAME AND RADIO TRANSCEIVER STATION
SYSTEME DE COMMUNICATION INDUSTRIEL POUVANT FONCTIONNER DE MANIERE REDONDANTE, SON PROCEDE DE FONCTIONNEMENT ET STATION EMETTRICE/RECEPTRICE RADIO

(43) Veröffentlichungstag der Anmeldung: 30.08.2017
(73) Patentinhaber: Siemens Aktiengesellschaft, 80333 München (DE)
(72) Erfinder: Müller, Jörg, 76351 Linkenheim (DE)

(56) Entgegenhaltungen:
- WO-A1-2014/187893
- DE-A1-102013 226 980
- US-A1- 2013 028 176
- CENA GIANLUCA ET AL: "An enhanced MAC to increase reliability in redundant Wi-Fi networks", 2014 10TH IEEE WORKSHOP ON FACTORY COMMUNICATION SYSTEMS (WFCS 2014), IEEE, 5. Mai 2014 (2014-05-05), Seiten 1-10, XP032608485, DOI: 10.1109/WFCS.2014.6837591 [gefunden am 2014-06-17]
- KASSIS MARCO T ET AL: "Analysis of parallel redundant WLAN with timing diversity", 2013 WORLD CONGRESS ON COMPUTER AND INFORMATION TECHNOLOGY (WCCIT), IEEE, 22. Juni 2013 (2013-06-22), Seiten 1-6, XP032494886, DOI: 10.1109/WCCIT.2013.6618663 ISBN: 978-1-4799-0460-0 [gefunden am 2013-10-02]

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle, wie Media Redundancy Protocol, High-availability Seamless Redundancy oder Parallel Redundancy Protocol, für hochverfügbare, redundant betreibbare industrielle Kommunikationsnetze entwickelt worden. Media Redundancy Protocol (MSR) ist im Standard IEC 62439 definiert und ermöglicht eine Kompensation einzelner Verbindungsausfälle in Netzen mit einfacher Ringtopologie bei stoßbehafteter redundanter Übertragung von Nachrichten. Entsprechend Media Redundancy Protocol ist einem Switch mit zwei Ports innerhalb der Ringtopologie ein Redundanz-Manager zugeordnet, der das Netz auf Verbindungsausfälle überwacht und ggf. eine Schaltmaßnahme für einen Ringschluss einleitet.

Stoßbehaftete Medienredundanzverfahren lassen sich grundsätzlich mit relativ geringem Aufwand realisieren. Nachteilig ist jedoch, dass einerseits Nachrichten im Fehlerfall verloren gehen können und andererseits während einer Rekonfiguration eines Kommunikationsnetzes zunächst ein Störungszustand vorliegt. Ein derartiger Störungszustand muss durch ein überlagertes Kommunikationsprotokoll, beispielsweise mittels TCP/IP auf Vermittlungs- bzw. Transportschichtebene, gesichert werden, um eine Unterbrechung einer Kommunikationsverbindung zu vermeiden.

Auch PROFINET (IEC 61158 Type 10) referenziert Media Redundancy Protocol als stoßbehaftetes Medienredundanzverfahren innerhalb eines Kommunikationsnetzes mit Ringtopologie. Media Redundancy Planned Duplication (MRPD) stellt demgegenüber eine Erweiterung für eine stoßfreie Übertragung von isochronen Echtzeitdaten dar. Bei Media Redundancy Planned Duplication handelt es sich jedoch nicht um ein anwendungsneutrales stoßfreies Medienredundanzverfahren, sondern um eine PROFINET-spezifische Erweiterung.

High-availability Seamless Redundancy (HSR) und Parallel Redundancy Protocol (PRP) sind im Standard IEC 62439-3 definiert und ermöglichen eine stoßfreie redundante Übertragung von Nachrichten mit äußerst geringen Erholungszeiten. Entsprechend High-availability Seamless Redundancy und Parallel Redundancy Protocol wird jede Nachricht von einem sendenden Kommunikationsgerät dupliziert und auf zwei verschiedenen Wegen zu einem Empfänger geschickt. Durch ein empfängerseitiges Kommunikationsgerät werden Duplikate darstellende redun-dante Nachrichten aus einem empfangenen Datenstrom ausgefiltert.

Im Standard IEC 62439-3 sind für das Parallel Redundancy Protocol (PRP) aufgrund verhältnismäßig langer Latenzlaufzeiten in Drahtlos-Kommunikationssystemen und eines dadurch bedingten nicht-deterministischen Übertragungsverhaltens bislang ausschließlich kabelgebundene Übertragungsstrecken vorgeschrieben. In "Towards a Reliable Parallel Redundant WLAN Black Channel", Markus Rentschler, Per Laukemann, IEEE 2012 wird eine Eignung von WLAN-Übertragungsstrecken in PRP-Kommunikationsnetzen untersucht. Mittels paralleler Anwendung unterschiedlicher Diversitätstechniken für beispielsweise Raum, Zeit und Frequenz können in WLAN-Kommunikationsnetzen Auswirkungen von stochastischem Kanalschwund hinreichend kompensiert werden.

In WO 2014/187893 A1 ist eine Vorrichtung entsprechend dem Oberbegriff von Patentanspruch 1 beschrieben. Zur drahtlosen Übertragung von einer Datenquelle zu einer Datensenke bzw. umgekehrt werden zwei voneinander unabhängige Funkstrecken verwendet. Dabei erfolgt die Übertragung zwischen den beiden Funkstrecken zeitversetzt.

Aus US 2013/028176 A1 ist ein Verfahren zur drahtlosen Übertragung von Datenpaketen bekannt, das auf Client-Zuordnungen basiert. Für ein Datenpaket, das an einem drahtlosen Access Point empfangen werden kann, wird ermittelt, ob dieses Datenpaket durch zumindest einen dem drahtlosen Access Point zugeordneten Client empfangen werden soll. Falls dem drahtlosen Access Point ein Client zugeordnet ist, der das Datenpaket empfangen soll, wird das Datenpaket drahtlos übertragen.

CENA GIANLUCA ET AL: "An enhanced MAC to increase reliability in redundant Wi-Fi networks", 2014 10TH IEEE WORKSHOP ON FACTORY COMMUNICATION SYSTEMS (WFCS 2014), IEEE, 5. Mai 2014, S. 1-10 beschreibt ein Konzept zur drahtlosen redundanten Übertragung von Datenrahmen. Bei einem erfolgreichen Empfang eines drahtlos gesendeten ersten Datenrahmens wird empfängerseitig eine Bestätigungsmeldung an eine senderseitige Funk-Transceiver-Station übermittelt. Dementsprechend wird ein Senden eines zweiten redundanten Datenrahmens senderseitig unterbunden.

Aus EP 2 712 124 A1 ist ein redundant betriebenes industrielles Kommunikationssystem mit redundant an ein industrielles Kommunikationsnetz angebundenen Kommunikationsgeräten bekannt, bei dem eine Nachrichtenübermittlung zumindest abschnittsweise kabellos erfolgt. Im industriellen Kommunikationsnetz ist eine Mehrzahl von Puffer-Speichereinheiten für an einem Netzknoten kabelgebunden empfangene und von diesem kabellos zu sendende Nachrichtenelemente vorgesehen. Bei Überschreiten einer maximalen Puffer-Größe wird ein ältestes in der jeweiligen Puffer-Speichereinheit befindliches Nachrichtenelement gelöscht. Bis zu einem Überschreiten der maximalen Puffer-Größe wird das älteste Nachrichtenelement als nächstes kabellos zu sendendes Nachrichtenelement ausgewählt.

In DE 10 2012 209509 A1 ist eine Vorrichtung zur sicheren Datenübertragung zwischen einem mobilen Teilnehmer, der zumindest eine Übertragungsvorrichtung aufweist, und einem stationären Empfänger beschrieben. Dabei kann der mobile Teilnehmer zwischen mehreren Funkzellen wechseln. Jede Funkzelle weist zumindest eine Übertragungsvorrichtung auf, die drahtgebunden an zumindest ein Netzwerk angeschlossen ist. Der stationäre Empfänger ist ebenfalls drahtgebunden an das zumindest eine Netzwerk angeschlossen. Sowohl die drahtlose Übertragung zwischen dem mobilen Teilnehmer und seiner jeweils zugehörigen Übertragungsvorrichtung als auch die drahtgebundene Datenübertragung zwischen der Übertragungsvorrichtung und dem zumindest einen zugehörigen Netzwerk erfolgt redundant. Der stationäre Empfänger ist redundant und drahtgebunden an das Netzwerk angeschlossen.

Zur hochverfügbaren Anbindung von Automatisierungsgeräten mit vollständig unabhängigen Ethernet-Schnittstellen innerhalb eines redundanten Komunikationsnetzes an einfach angebundene Automatisierungsgeräte wird entsprechend DE 10 2013 211406 A1 für das jeweilige einfach angebundene Automatisierungsgerät ein Y-Switch verwendet. Dabei ist der Y-Switch über einen ersten bzw. zweiten Port mit einem ersten bzw. Teilnetz des redundanten Kommunikationsnetzes verbunden, während er über einen dritten Port mittelbar oder unmittelbar mit dem einfach angebundenen Automatisierungsgerät verbunden ist. Darüber hinaus werden eingehende Datenrahmen am ersten, zweiten bzw. dritten Port einem ersten, zweiten bzw. dritten VLAN zugeordnet. Zusätzlich werden der erste bzw. zweite Port als Untagged Member für das erste und dritte VLAN bzw. für das zweite und dritte VLAN eingerichtet. Der dritte Port wird für alle drei VLANs als Untagged Member eingerichtet. An den ersten beiden Ports gelernte Unicast-MAC-Adressen werden automatisch als statischer Eintrag für das dritte VLAN übernommen. Bei Löschen einer an den ersten beiden Ports gelernten Unicast-MAC-Adresse erfolgt auch ein Löschen des korrespondierenden statischen Eintrags für das dritte VLAN.

Aus DE 10 2011 082965 A1 ist ein Verfahren zum Betreiben einer Netzwerkanordnung bekannt, die mehrere in einer Ringstruktur aneinander gekoppelte Netzwerkeinrichtungen umfasst. Jede Netzwerkeinrichtung weist dabei eine Steuereinrichtung und eine Switch-Einrichtung mit mindestens zwei Ports zum Ankoppeln an einen Kommunikationspfad auf. Beim Betrieb werden gleichzeitig mindestens zwei VLANs in der Ringstruktur bereitgestellt. Dabei erfolgt ein Versenden eines Datenpakets von der Steuereinrichtung einer ausgewählten Netzwerkeinrichtung über einen Port der Switch-Einrichtung in eines der zwei VLANs. Dabei wird der andere Port der Switch-Einrichtung der ausgewählten Netzwerkeinrichtung für das eine VLAN deaktiviert. Durch das Verwenden von zwei VLANS ist eine redundante zuverlässige Datenübertragung möglich. Eine Destabilisierung der VLANs im Netzwerkring wird durch die gezielte Deaktivierung bestimmter Ports der sendenden Netzwerkeinrichtung verhindert.

In DE 10 2011 004064 A1 ist ein Zwischennetzwerk in Ringtopologie zum Herstellen einer Verbindung zwischen zwei Netzwerkdomänen bekannt, das einen ersten Randknoten und einen zweiten Randknoten umfasst, die Randknoten einer ersten Netzwerkdomäne sind. Diese Randknoten sind über eine erste Netzwerkverbindung innerhalb der ersten Netzwerkdomäne miteinander verbunden. Zusätzlich sind ein dritter Randknoten und ein vierter Randknoten vorgesehen, die Randknoten einer zweiten Netzwerkdomäne sind. Diese Randknoten sind über eine zweite Netzwerkverbindung innerhalb der zweiten Netzwerkdomäne miteinander verbunden. Eine erste virtuelle Netzwerkverbindung verbindet den ersten und den dritten Randknoten über ein Zwischennetz. Eine zweite virtuelle Netzwerkverbindung verbindet den zweiten und den vierten Randknoten über das Zwischennetz. Die erste Netzwerkverbindung, die zweite Netzwerkverbindung, die erste virtuelle Netzwerkverbindung und die zweite virtuelle Netzwerkverbindung weisen eine Ringtopologie auf, auf der ein Verbindungsredundanzprotokoll implementiert ist.

Der vorliegenden Erfindung liegt die Aufgabe zugrunde, ein redundant betreibbares Kommunikationssystem mit Kabellos-Übertragungsstrecken zu schaffen, das für eine Verwendung in industriellen Automatisierungssystemen eine erhöhte Datenübertragungsrate ermöglicht, ein Verfahren zu dessen Betrieb sowie geeignete Systemkomponenten anzugeben.

Diese Aufgabe wird erfindungsgemäß durch ein Kommunikationssystem mit den in Anspruch 1 angegebenen Merkmalen, durch ein Verfahren mit den in Anspruch 14 angegebenen Merkmalen und durch eine Funk-Transceiver-Station mit den in Anspruch 20 angegebenen Merkmalen gelöst. Vorteilhafte Weiterbildungen der vorliegenden Erfindung sind in den abhängigen Ansprüchen angegeben.

Das erfindungsgemäße Kommunikationssystem umfasst zumindest ein erstes und ein zweites redundant an ein industrielles Kommunikationsnetz angebundenes Kommunikationsgerät mit jeweils zumindest einem ersten und einem zweiten Kommunikationsnetzanschluss. Mit dem ersten und zweiten Kommunikationsnetzanschluss ist eine Signalverarbeitungseinheit verbunden, die eine Multiplexereinheit zur parallelen Weiterleitung zu sendender Datenrahmen an beide Kommunikationsnetzanschlüsse und eine Redundanzbehandlungseinheit zur Verarbeitung von beiden Kommunikationsnetzanschlüssen empfangener Datenrahmen aufweist. Dabei umfasst die Redundanzbehandlungseinheit eine Filtereinheit, die für eine Detektion empfangener redundanter Datenrahmen ausgestaltet und eingerichtet ist. Darüber hinaus sind zumindest ein erstes und ein zweites dem industriellen Kommunikationsnetz zugeordnetes Netzinfrastrukturgerät vorgesehen, die jeweils eine Mehrzahl von Kommunikationsnetzanschlüssen und ein die Kommunikationsnetzanschlüsse miteinander verbindendes Koppelelement umfassen. Die Netzinfrastrukturgeräte können beispielsweise Switches sein. Vorzugsweise ist das Koppelelement eines Netzinfrastrukturgeräts ein Hochgeschwindigkeitsbus bzw. ein Backplane Switch mit zugeordnetem Controller.

Erfindungsgemäß ist das erste Kommunikationsgerät über seinen ersten und zweiten Kommunikationsnetzanschluss redundant an das erste Netzinfrastrukturgerät angeschlossen, während das zweite Kommunikationsgerät über seinen ersten und zweiten Kommunikationsnetzanschluss redundant an das zweite Netzinfrastrukturgerät angeschlossen ist. Das erste und zweite Kommunikationsgerät bzw. das erste und zweite Netzinfrastrukturgerät sind dafür ausgestaltet und eingerichtet, insbesondere konfiguriert, dass vom ersten Kommunikationsnetzanschluss des ersten und des zweiten Kommunikationsgeräts an das jeweilige Netzinfrastrukturgerät übermittelte Datenrahmen einem ersten virtuellen lokalen Netz zugeordnet werden. Außerdem sind das erste und zweite Kommunikationsgerät bzw. das erste und zweite Netzinfrastrukturgerät dafür ausgestaltet und eingerichtet, dass vom zweiten Kommunikationsnetzanschluss des ersten und des zweiten Kommunikationsgeräts an das jeweilige Netzinfrastrukturgerät übermittelte Datenrahmen einem zweiten virtuellen lokalen Netz zugeordnet werden. Darüber hinaus sind an das erste und an das zweite Netzinfrastrukturgerät jeweils zumindest eine erste und eine zweite Funk-Transceiver-Station angeschlossen. Die Funk-Transceiver-Stationen bzw. die Netzinfrastrukturgeräte sind dafür ausgestaltet und eingerichtet, insbesondere durch Konfiguration, dass dem ersten virtuellen lokalen Netz zugeordnete Datenrahmen mittels der jeweiligen ersten Funk-Transceiver-Station über ein erstes Funknetz gesendet werden und dass dem zweiten virtuellen lokalen Netz zugeordnete Datenrahmen mittels der jeweiligen zweiten Funk-Transceiver-Station über ein zweites Funknetz gesendet werden. Das erste und zweite Funknetz können beispielsweise ein Wireless Local Area Network, ein WiMAX-, ein UMTS-, ein LTE-Mobilfunknetz oder ein sonstiges Mobilfunknetz sein. Vorteilhafterweise sind das erste und zweite Funknetz mittels einer Funknetz-Kennung identifizierbar, beispielsweise mittels eines Service Set Identifier. Grundsätzlich können die ersten und zweiten Funk-Transceiver-Stationen jeweils zumindest dem ersten und zweiten Funknetz zugeordnet sein.

Erfindungsgemäß sind die ersten und zweiten Funk-Transceiver-Stationen durch ein koordiniertes Sende-Queue-Management dafür ausgestaltet und eingerichtet, dass die an dasselbe Netzinfrastrukturgerät angeschlossene erste und zweite Funk-Transceiver-Station ihre Reihenfolgen für zu sendende Datenrahmen derart koordinieren, dass beide Funk-Transceiver-Stationen Datenrahmen niemals gleichzeitig an dieselbe Ziel-MAC-Adresse senden.

Das erfindungsgemäße Kommunikationssystem bietet als Vorteil, dass die beiden Funknetze nicht gleichzeitig mit zueinander redundantem Datenverkehr für denselben Empfänger belegt werden, sondern durch entsprechende Sende-Queue-Verwaltung für unterschiedliche Empfänger zeitgleich genutzt werden. Hierdurch ergibt sich eine effizientere Ressourcenausnutzung bzw. eine erhöhte effektive Datenübertragungsrate. Werden beide Funknetze mit unterschiedlichen Frequenzbändern betrieben, ist zudem eine Wahrscheinlichkeit einer zeitgleichen Störung sehr gering.

Entsprechend einer vorteilhaften Ausgestaltung der vorliegenden Erfindung sind zueinander redundante Datenrahmen durch eine einheitliche Sequenznummer gekennzeichnet. Dabei sind die Signalverarbeitungseinheiten des ersten und des zweiten Kommunikationsgeräts für eine Vergabe einer Sequenznummer an einen redundant zu übermittelnden Datenrahmen ausgestaltet und eingerichtet. Vorzugsweise sind die erste und zweite Funk-Transceiver-Station dafür ausgestaltet und eingerichtet, dass bei einem erfolgreichen Empfang eines über das erste oder zweite Funknetz gesendeten Datenrahmens empfängerseitig eine Bestätigungsmeldung an eine senderseitige Funk-Transceiver-Station übermittelt wird. Des weiteren sind die Funk-Transceiver-Stationen bzw. die Netzinfrastrukturgeräte bevorzugt dafür ausgestaltet und eingerichtet, dass ein Senden eines redundanten Datenrahmens mit einer Sequenznummer, die einer senderseitig empfangenen Bestätigungsmeldung zugeordnet ist, unterbunden wird. Ist ein Datenrahmen beispielsweise bereits über eine schnellere Funkverbindung übertragen worden, braucht ein zu diesem redundanter Datenrahmen nicht mehr verzögert bzw. über eine langsamere Funkverbindung übertragen zu werden, sondern kann senderseitig verworfen werden. Dies ermöglicht eine effizientere Ressourcenausnutzung.

Vorzugsweise erfolgt eine Übertragung redundant zu übermittelnder Datenrahmen entsprechend High-availability Seamless Redundancy bzw. entsprechend Parallel Redundancy Protocol. Dabei können das erste und zweite Kommunikationsgerät beispielsweise eine HSR- bzw. PRP-Redbox sein. Über eine solche HSR- bzw. PRP-Redbox kann jeweils ein einfach angebundenes Kommunikationsgerät mit dem industriellen Kommunikationsnetz verbunden sein.

Entsprechend einer weiteren Ausgestaltung der vorliegenden Erfindung sind die ersten und zweiten Funk-Transceiver-Stationen dafür ausgestaltet und eingerichtet, dass eine Reihenfolge für zu sendende Datenrahmen anhand den zu sendenden Datenrahmen zugeordneter Ziel-MAC-Adressen - anstelle entsprechend FIFO-Prinzip - festgelegt wird. In diesem Fall wird die Reihenfolge innerhalb an eine ausgewählte Ziel-MAC-Adresse zu sendender Datenrahmen durch ihre Eingangsreihenfolge festgelegt.

Darüber hinaus können sich die Funk-Transceiver-Stationen bei einer Suche nach korrespondierenden Partner-Stationen derart koordinieren, dass eine Datenübertragung bei der Suche kurzzeitig unterbrochen und auf anderen Funkkanälen nach verfügbaren Partner-Stationen gesucht wird. Hierzu können zwei an dasselbe Netzinfrastrukturgerät angeschlossene Funk-Transceiver-Stationen untereinander ein Scan-Token austauschen, durch das festgelegt wird, welche Funk-Transceiver-Station aktiv Daten überträgt und welche Funk-Transceiver-Station einen Scan nach verfügbaren Partner-Stationen durchführt, die an ein jeweils anderes Netzinfrastrukturgerät angeschlossen sind.

Entsprechend dem erfindungsgemäßen Verfahren zum redundanten Betrieb eines industriellen Kommunikationssystems werden zumindest ein erstes und ein zweites Kommunikationsgerät redundant an ein industrielles Kommunikationsnetz angebunden. Dabei weisen das erste und zweite Kommunikationsgerät jeweils zumindest einen ersten und einem zweiten Kommunikationsnetzanschluss und eine mit dem ersten und zweiten Kommunikationsnetzanschluss verbundene Signalverarbeitungseinheit auf. Die Signalverarbeitungseinheit leitet zu sendende Datenrahmen parallel an beide Kommunikationsnetzanschlüsse weiter und detektiert von beiden Kommunikationsnetzanschlüssen empfangene redundante Datenrahmen. Darüber hinaus sind zumindest ein erstes und ein zweites dem industriellen Kommunikationsnetz zugeordnetes Netzinfrastrukturgerät vorgesehen, die jeweils eine Mehrzahl von Kommunikationsnetzanschlüssen und ein die Kommunikationsnetzanschlüsse miteinander verbindendes Koppelelement aufweisen.

Erfindungsgemäß ist das erste Kommunikationsgerät über seinen ersten und zweiten Kommunikationsnetzanschluss redundant an das erste Netzinfrastrukturgerät angeschlossen, während das zweite Kommunikationsgerät über seinen ersten und zweiten Kommunikationsnetzanschluss redundant an das zweite Netzinfrastrukturgerät angeschlossen ist. Vom ersten Kommunikationsnetzanschluss des ersten und des zweiten Kommunikationsgeräts an das jeweilige Netzinfrastrukturgerät übermittelte Datenrahmen werden einem ersten virtuellen lokalen Netz zugeordnet. Dagegen werden vom zweiten Kommunikationsnetzanschluss des ersten und des zweiten Kommunikationsgeräts an das jeweilige Netzinfrastrukturgerät übermittelte Datenrahmen einem zweiten virtuellen lokalen Netz zugeordnet. Darüber hinaus sind an das erste und an das zweite Netzinfrastrukturgerät jeweils zumindest eine erste und eine zweite Funk-Transceiver-Station angeschlossen. Dem ersten virtuellen lokalen Netz zugeordnete Datenrahmen werden mittels der jeweiligen ersten Funk-Transceiver-Station über ein erstes Funknetz gesendet, während dem zweiten virtuellen lokalen Netz zugeordnete Datenrahmen mittels der jeweiligen zweiten Funk-Transceiver-Station über ein zweites Funknetz gesendet werden. Vorteilhafterweise ist den beiden Funknetzen eine unterschiedliche Kennung bzw. Identifizierung zugeordnet.

Vorzugsweise werden zueinander redundante Datenrahmen durch eine einheitliche Sequenznummer gekennzeichnet. Dabei vergeben die Signalverarbeitungseinheiten des ersten und des zweiten Kommunikationsgeräts eine Sequenznummer an einen redundant zu übermittelnden Datenrahmen. Entsprechend einer besonders bevorzugten Ausgestaltung des erfindungsgemäßen Verfahrens übermitteln die erste und zweite Funk-Transceiver-Station bei einem erfolgreichen Empfang eines über das erste oder zweite Funknetz gesendeten Datenrahmens empfängerseitig eine Bestätigungsmeldung an eine senderseitige Funk-Transceiver-Station. Vorteilhafterweise unterbinden die Funk-Transceiver-Stationen bzw. die Netzinfrastrukturgeräte ein Senden eines redundanten Datenrahmens mit einer Sequenznummer, die einer senderseitig empfangenen Bestätigungsmeldung zugeordnet ist.

Die vorliegende Erfindung wird nachfolgend an einem Ausführungsbeispiel anhand der Zeichnung näher erläutert. Es zeigt
- Figur 1: einen ersten Teil eines industriellen Kommunikationssystems mit einer ersten HSR/PRP-Redbox, einem ersten VLAN-fähigen Switch und mehreren an den ersten Switch angeschlossenen WLAN-Transceiver-Stationen,
- Figur 2: einen zweiten Teil eines industriellen Kommunikationssystems mit einer ersten HSR/PRP-Redbox, einem zweiten VLAN-fähigen Switch und mehreren an den zweiten Switch angeschlossenen WLAN-Transceiver-Stationen.

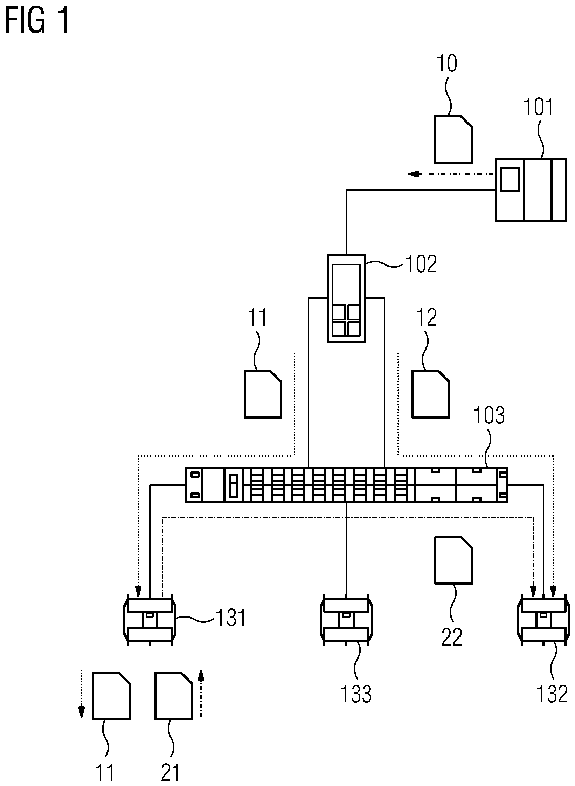

Der in Figur 1 dargestellte erste Teil des industriellen Kommunikationssystems umfasst eine erste HSR/PRP-Redbox 102, die zumindest 3 Kommunikationsnetzanschlüsse aufweist. Über einen ersten und zweiten Kommunikationsnetzanschluss ist die erste HSR/PRP-Redbox 102 redundant an einen ersten VLAN-fähigen Switch 103 angeschlossen. An einen Interlink-Port, der einen dritten Kommunikationsnetzanschluss der ersten HSR/PRP-Redbox 102 darstellt, ist im vorliegenden Ausführungsbeispiel auf Leitsystemebene ein SCADA-System 101 (Supervisory Control and Data Acquisition) angeschlossen. Darüber hinaus umfasst der erste Teil des industriellen Kommunikationssystems 3 an den ersten Switch 103 angeschlossene WLAN-Stationen 131-133, die wahlweise eine Rolle als WLAN-Access-Point oder als WLAN-Client wahrnehmen können. Anstelle von WLAN-Stationen können grundsätzlich auch Funk-Transceiver-Stationen für ein WiMAX-, ein UMTS-, ein LTE-Mobilfunknetz oder ein sonstiges Mobilfunknetz verwendet werden. Nachfolgende Ausführungen gelten hierfür analog.

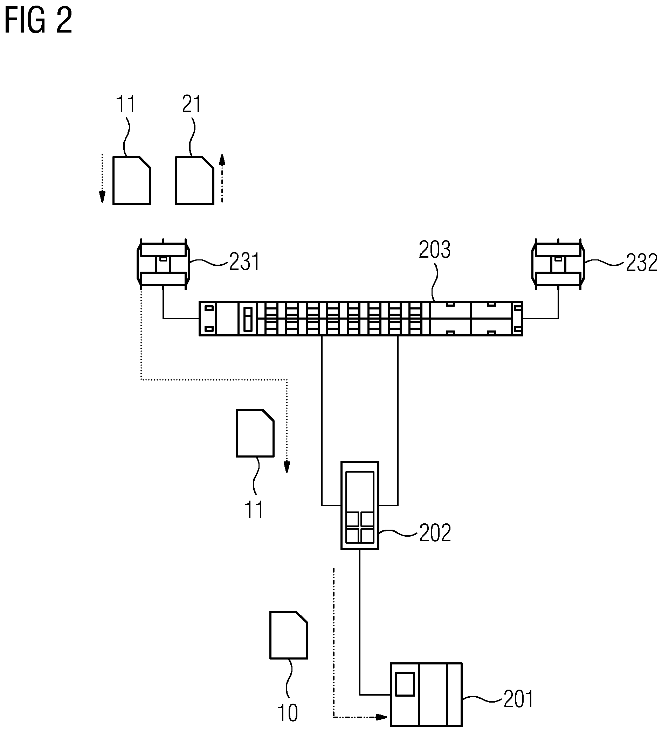

Entsprechend Figur 2 umfasst der zweite Teil des industriellen Kommunikationssystems eine zweite HSR/PRP-Redbox 202, die ebenfalls zumindest 3 Kommunikationsnetzanschlüsse aufweist. Über einen ersten und zweiten Kommunikationsnetzanschluss ist die zweite HSR/PRP-Redbox 202 redundant an einen zweiten VLAN-fähigen Switch 203 angeschlossen. An einen Interlink-Port, der einen dritten Kommunikationsnetzanschluss der zweiten HSR/PRP-Redbox 202 darstellt, ist im vorliegenden Ausführungsbeispiel auf Feldebene ein Sensor- bzw. Aktorsystem 201 eines industriellen Automatisierungssystems angeschlossen. Dieses Sensor- bzw. Aktorsystem 201 kann beispielsweise ein Fertigungsroboter, ein Antrieb für ein Fördersystem oder eine Bedien- und Beobachtungsstation an einer Fertigungslinie sein. Darüber hinaus umfasst der zweite Teil des industriellen Kommunikationssystems 2 an den zweiten Switch 203 angeschlossene WLAN-Stationen 231-232, die ebenfalls wahlweise eine Rolle als WLAN-Access-Point oder als WLAN-Client wahrnehmen können.

Der erste 103 und der zweite Switch 203 umfassen jeweils eine Mehrzahl von Kommunikationsnetzanschlüssen und ein die Kommunikationsnetzanschlüsse miteinander verbindendes Koppelelement. Ein solches Koppelelement kann beispielsweise durch einen Hochgeschwindigkeitsbus bzw. einen Backplane Switch mit zugeordnetem Controller realisiert sein.

Die erste 102 und zweite HSR/PRP-Redbox 202 weisen jeweils eine mit ihren Kommunikationsanschlüssen verbundene Signalverarbeitungseinheit auf, die eine Multiplexereinheit zur parallelen Weiterleitung zu sendender Datenrahmen (Frames) an den jeweiligen ersten und zweiten Kommunikationsnetzanschluss aufweist. Durch eine Multiplexereinheit werden von einem einfach an das industrielle Kommunikationsnetz angebundenen Kommunikations- bzw. Automatisierungsgerät gesendete Datenrahmen 10 dupliziert. Zueinander redundante Datenrahmen 11, 12 werden durch eine einheitliche Sequenznummer gekennzeichnet, die durch die jeweilige Signalverarbeitungseinheit an redundant zu übermittelnde Datenrahmen vergeben wird. Die zueinander redundanten Datenrahmen 11, 12 werden dann von der jeweiligen HSR/PRP-Redbox 102, 202 an den ersten 103 bzw. zweiten Switch 203 übermittelt. Der erste 103 bzw. zweite Switch 203 leiten diese Datenrahmen 11, 12 dann an eine jeweilige 131, 231 erste bzw. zweite WLAN-Station 132, 232 weiter.

Darüber hinaus weisen die erste 102 und zweite HSR/PRP-Redbox 202 jeweils eine Redundanzbehandlungseinheit zur Verarbeitung vom jeweiligen ersten und zweiten Kommunikationsnetzanschluss empfangener Datenrahmen auf. Die Redundanzbehandlungseinheit umfasst wiederum eine Filtereinheit, die für eine Detektion und Ausfilterung empfangener redundanter Datenrahmen vorgesehen ist. Des weiteren ist der jeweiligen Signalverarbeitungseinheit jeweils eine Speichereinheit zugeordnet, die Sequenznummern bereits fehlerfrei empfangener Datenrahmen speichert. Bei Empfang eines neuen Datenrahmens führt die Redundanzbehandlungseinheit eine Überprüfung auf Übereinstimmung mit einer bereits gespeicherten Sequenznummer durch. Redundant zu übermittelnde Datenrahmen werden im vorliegenden Ausführungsbeispiel entsprechend Parallel Redundancy Protocol übertragen. Grundsätzlich ist auch eine Übertragung entsprechend High-availability Seamless Redundancy möglich. Nachfolgende Ausführungen gelten hierfür analog.

Vom ersten Kommunikationsnetzanschluss der ersten 102 und der zweiten HSR/PRP-Redbox 202 an den jeweiligen Switch 103, 203 übermittelte Datenrahmen werden einem ersten VLAN zugeordnet. Analog dazu werden vom zweiten Kommunikationsnetzanschluss der ersten 102 und der zweiten HSR/PRP-Redbox 202 an den jeweiligen Switch 103, 203 übermittelte Datenrahmen einem zweiten VLAN zugeordnet. Dem ersten VLAN zugeordnete Datenrahmen werden mittels der jeweiligen ersten WLAN-Station 131, 231 über ein erstes WLAN-Netz mit einer ersten WLAN-SSID gesendet, während dem zweiten VLAN zugeordnete Datenrahmen mittels der jeweiligen zweiten WLAN-Station 132, 232 über ein zweites WLAN-Netz mit einer zweiten WLAN-SSID gesendet werden. Dabei sind die erste WLAN-SSID und die zweite WLAN-SSID voneinander verschieden. Grundsätzlich können die ersten 131, 231 und zweiten WLAN-Stationen 132, 232 für sonstigen Datenverkehr auch dem zweiten bzw. ersten WLAN-Netz zugeordnet sein.

Bei einem erfolgreichen Empfang eines über das erste oder zweite WLAN-Netz gesendeten Datenrahmens übermitteln die WLAN-Stationen 131-133, 231-232 empfängerseitig eine Acknowledge-Meldung 21 an eine senderseitige WLAN-Station 131. Bei Empfang einer Acknowledgement-Meldung 21 übermittelt diese senderseitige WLAN-Station 132 eine Drop-Frame-Meldung 132 an ihrer zugeordneten Partner-WLAN-Station 132, die an denselben Switch 103 angeschlossen ist. Auf eine solche Drop-Frame-Meldung 22 unterbindet die jeweilige Partner-WLAN-Station 132 ein Senden eines redundanten Datenrahmens mit einer Sequenznummer, die einer senderseitig empfangenen Acknowledgement-Meldung 21 zugeordnet ist. Dies kann beispielsweise durch ein Löschen bzw. Verwerfen eines redundanten Datenrahmens aus einer Sende-Queue der Partner-WLAN-Station erfolgen, insbesondere sobald dieser Datenrahmen nach Übermittlung vom jeweiligen Switch an der Partner-WLAN-Station eintrifft.

Für einen erhöhten Datendurchsatz hinsichtlich per WLAN übermittelter Datenrahmen werden zu sendende Datenrahmen nach Duplizierung mittels einer HSR/PRP-Redbox durch die WLAN-Stationen vorzugsweise nicht mehr entsprechend FIFO-Prinzip gesendet, sondern in ihrer Sendereihenfolge nach Ziel-MAC-Adressen sortiert. Innerhalb einer Ziel-MAC-Adresse erfolgt dabei eine Beibehaltung einer ursprünglichen Reihenfolge entsprechend Empfangszeitpunkten an der jeweiligen WLAN-Station. Vorzugsweise wird darüber hinaus an einander zugeordneten Partner-WLAN-Stationen durch ein koordiniertes Sende-Queue-Management sichergestellt, dass über die beiden Partner-WLAN-Stationen niemals gleichzeitig Datenrahmen an dieselbe Ziel-MAC-Adresse übermittelt werden.

## Patentansprüche

1. Redundant betreibbares industrielles Kommunikationssystem mit
- zumindest einem ersten und einem zweiten redundant an ein industrielles Kommunikationsnetz angebundenen Kommunikationsgerät (102, 202) mit jeweils
- zumindest einem ersten und einem zweiten Kommunikationsnetzanschluss,
- einer mit dem ersten und zweiten Kommunikationsnetzanschluss verbundenen Signalverarbeitungseinheit, die eine Multiplexereinheit zur parallelen Weiterleitung zu sendender Datenrahmen an beide Kommunikationsnetzanschlüsse und eine Redundanzbehandlungseinheit zur Verarbeitung von beiden Kommunikationsnetzanschlüssen empfangener Datenrahmen aufweist, wobei die Redundanzbehandlungseinheit eine Filtereinheit umfasst, die für eine Detektion empfangener redundanter Datenrahmen (11, 12) ausgestaltet und eingerichtet ist,
- zumindest einem ersten und einem zweiten dem industriellen Kommunikationsnetz zugeordneten Netzinfrastrukturgerät (103, 203) mit jeweils
- einer Mehrzahl von Kommunikationsnetzanschlüssen,
- einem die Kommunikationsnetzanschlüsse miteinander verbindenden Koppelelement, wobei
- das erste Kommunikationsgerät (102) über seinen ersten und zweiten Kommunikationsnetzanschluss redundant an das erste Netzinfrastrukturgerät (103) angeschlossen ist,
- das zweite Kommunikationsgerät (202) über seinen ersten und zweiten Kommunikationsnetzanschluss redundant an das zweite Netzinfrastrukturgerät (203) angeschlossen ist,
**dadurch gekennzeichnet, dass**
- das erste und zweite Kommunikationsgerät und/oder das erste und zweite Netzinfrastrukturgerät dafür ausgestaltet und eingerichtet sind, dass vom ersten Kommunikationsnetzanschluss des ersten und des zweiten Kommunikationsgeräts an das jeweilige Netzinfrastrukturgerät übermittelte Datenrahmen einem ersten virtuellen lokalen Netz zugeordnet werden und dass vom zweiten Kommunikationsnetzanschluss des ersten und des zweiten Kommunikationsgeräts an das jeweilige Netzinfrastrukturgerät übermittelte Datenrahmen einem zweiten virtuellen lokalen Netz zugeordnet werden,
- an das erste und an das zweite Netzinfrastrukturgerät jeweils zumindest eine erste und eine zweite Funk-Transceiver-Station (131-132, 231-232) angeschlossen sind,
- die Funk-Transceiver-Stationen und/oder die Netzinfrastrukturgeräte dafür ausgestaltet und eingerichtet sind, dass dem ersten virtuellen lokalen Netz zugeordnete Datenrahmen mittels der jeweiligen ersten Funk-Transceiver-Station über ein erstes Funknetz gesendet werden und dass dem zweiten virtuellen lokalen Netz zugeordnete Datenrahmen mittels der jeweiligen zweiten Funk-Transceiver-Station über ein zweites Funknetz gesendet werden,
- bei dem die ersten und zweiten Funk-Transceiver-Stationen durch ein koordiniertes Sende-Queue-Management dafür ausgestaltet und eingerichtet sind, dass die an dasselbe Netzinfrastrukturgerät angeschlossene erste und zweite Funk-Transceiver-Station ihre Reihenfolgen für zu sendende Datenrahmen derart koordinieren, dass beide Funk-Transceiver-Stationen Datenrahmen niemals gleichzeitig an dieselbe Ziel-MAC-Adresse senden.

2. Kommunikationssystem nach Anspruch 1,
bei dem zueinander redundante Datenrahmen durch eine einheitliche Sequenznummer gekennzeichnet sind, und bei dem die Signalverarbeitungseinheiten des ersten und des zweiten Kommunikationsgeräts für eine Vergabe einer Sequenznummer an einen redundant zu übermittelnden Datenrahmen ausgestaltet und eingerichtet sind.

3. Kommunikationssystem nach Anspruch 2,
bei dem die erste und zweite Funk-Transceiver-Station dafür ausgestaltet und eingerichtet sind, dass bei einem erfolgreichen Empfang eines über das erste oder zweite Funknetz gesendeten Datenrahmens empfängerseitig eine Bestätigungsmeldung (21) an eine senderseitige Funk-Transceiver-Station übermittelt wird.

4. Kommunikationssystem nach Anspruch 3,
bei dem die Funk-Transceiver-Stationen und/oder die Netzinfrastrukturgeräte dafür ausgestaltet und eingerichtet sind, dass ein Senden eines redundanten Datenrahmens mit einer Sequenznummer, die einer senderseitig empfangenen Bestätigungsmeldung zugeordnet ist, unterbunden wird.

5. Kommunikationssystem nach einem der Ansprüche 1 bis 4,
bei dem eine Übertragung redundant zu übermittelnder Datenrahmen entsprechend High-availability Seamless Redundancy und/oder entsprechend Parallel Redundancy Protocol erfolgt.

6. Kommunikationssystem nach Anspruch 5,
bei dem das erste und zweite Kommunikationsgerät eine HSR- und/oder PRP-Redbox sind.

7. Kommunikationssystem nach Anspruch 6,
bei dem über das erste und zweite Kommunikationsgerät jeweils ein einfach angebundenes Kommunikationsgerät mit dem industriellen Kommunikationsnetz verbunden ist.

8. Kommunikationssystem nach einem der Ansprüche 1 bis 7,
bei dem das Koppelelement eines Netzinfrastrukturgeräts ein Hochgeschwindigkeitsbus und/oder ein Backplane Switch mit zugeordnetem Controller ist.

9. Kommunikationssystem nach einem der Ansprüche 1 bis 8,
bei dem das erste und zweite Funknetz ein Wireless Local Area Network, ein WiMAX-, ein UMTS-, ein LTE-Mobilfunknetz oder ein sonstiges Mobilfunknetz sind.

10. Kommunikationssystem nach einem der Ansprüche 1 bis 9,
bei dem das erste und zweite Funknetz mittels einer Funknetz-Kennung identifizierbar sind.

11. Kommunikationssystem nach Anspruch 10,
bei dem die Funknetz-Kennung ein Service Set Identifier ist.

12. Kommunikationssystem nach einem der Ansprüche 1 bis 11,
bei dem die ersten und zweiten Funk-Transceiver-Stationen jeweils zumindest dem ersten und zweiten Funknetz zugeordnet sind.

13. Kommunikationssystem nach einem der Ansprüche 1 bis 12,
bei dem die ersten und zweiten Funk-Transceiver-Stationen dafür ausgestaltet und eingerichtet sind, dass eine Reihenfolge für zu sendende Datenrahmen anhand den zu sendenden Datenrahmen zugeordneter Ziel-MAC-Adressen festgelegt wird, wobei die Reihenfolge innerhalb an eine ausgewählte Ziel-MAC-Adresse zu sendender Datenrahmen durch ihre Eingangsreihenfolge festgelegt wird.

14. Verfahren zum redundanten Betrieb eines industriellen Kommunikationssystems, bei dem
- zumindest ein erstes und ein zweites Kommunikationsgerät redundant an ein industrielles Kommunikationsnetz angebunden werden, wobei das erste und zweite Kommunikationsgerät jeweils
- zumindest einen ersten und einen zweiten Kommunikationsnetzanschluss und
- eine mit dem ersten und zweiten Kommunikationsnetzanschluss verbundene Signalverarbeitungseinheit aufweisen, die zu sendende Datenrahmen parallel an beide Kommunikationsnetzanschlüsse weiterleitet und von beiden Kommunikationsnetzanschlüssen empfangene redundante Datenrahmen detektiert,
- zumindest ein erstes und ein zweites dem industriellen Kommunikationsnetz zugeordnetes Netzinfrastrukturgerät vorgesehen sind, die jeweils
- eine Mehrzahl von Kommunikationsnetzanschlüssen und
- ein die Kommunikationsnetzanschlüsse miteinander verbindendes Koppelelement aufweisen, wobei
- das erste Kommunikationsgerät über seinen ersten und zweiten Kommunikationsnetzanschluss redundant an das erste Netzinfrastrukturgerät angeschlossen ist,
- das zweite Kommunikationsgerät über seinen ersten und zweiten Kommunikationsnetzanschluss redundant an das zweite Netzinfrastrukturgerät angeschlossen ist,
**dadurch gekennzeichnet, dass**
- vom ersten Kommunikationsnetzanschluss des ersten und des zweiten Kommunikationsgeräts an das jeweilige Netzinfrastrukturgerät übermittelte Datenrahmen einem ersten virtuellen lokalen Netz und vom zweiten Kommunikationsnetzanschluss des ersten und des zweiten Kommunikationsgeräts an das jeweilige Netzinfrastrukturgerät übermittelte Datenrahmen einem zweiten virtuellen lokalen Netz zugeordnet werden,
- an das erste und an das zweite Netzinfrastrukturgerät jeweils zumindest eine erste und eine zweite Funk-Transceiver-Station angeschlossen sind,
- dem ersten virtuellen lokalen Netz zugeordnete Datenrahmen mittels der jeweiligen ersten Funk-Transceiver-Station über ein erstes Funknetz und dem zweiten virtuellen lokalen Netz zugeordnete Datenrahmen mittels der jeweiligen zweiten Funk-Transceiver-Station über ein zweites Funknetz gesendet werden,
- die ersten und zweiten Funk-Transceiver-Stationen, die an dasselbe Netzinfrastrukturgerät angeschlossen sind, ihre Reihenfolgen für zu sendende Datenrahmen durch ein Sende-Queue-Management derart koordinieren, dass beide Funk-Transceiver-Stationen Datenrahmen niemals gleichzeitig an dieselbe Ziel-MAC-Adresse senden.

15. Verfahren nach Anspruch 14,
bei dem zueinander redundante Datenrahmen durch eine einheitliche Sequenznummer gekennzeichnet werden und bei dem die Signalverarbeitungseinheiten des ersten und des zweiten Kommunikationsgeräts eine Sequenznummer an einen redundant zu übermittelnden Datenrahmen vergeben.

16. Verfahren nach Anspruch 15,
bei dem die erste und zweite Funk-Transceiver-Station bei einem erfolgreichen Empfang eines über das erste oder zweite Funknetz gesendeten Datenrahmens empfängerseitig eine Bestätigungsmeldung an eine senderseitige Funk-Transceiver-Station übermitteln.

17. Verfahren nach Anspruch 16,
bei dem die Funk-Transceiver-Stationen und/oder die Netzinfrastrukturgeräte ein Senden eines redundanten Datenrahmens mit einer Sequenznummer unterbinden, die einer senderseitig empfangenen Bestätigungsmeldung zugeordnet ist.

18. Verfahren nach einem der Ansprüche 14 bis 17,
bei dem redundant zu übermittelnde Datenrahmen entsprechend High-availability Seamless Redundancy und/oder entsprechend Parallel Redundancy Protocol übertragen werden.

19. Verfahren nach einem der Ansprüche 14 bis 18,
bei dem die ersten und zweiten Funk-Transceiver-Stationen eine Reihenfolge für zu sendende Datenrahmen anhand den zu sendenden Datenrahmen zugeordneter Ziel-MAC-Adressen festlegen, wobei die Reihenfolge innerhalb an eine ausgewählte Ziel-MAC-Adresse zu sendender Datenrahmen durch ihre Eingangsreihenfolge festgelegt wird.

20. Funk-Transceiver-Station zur Durchführung eines Verfahrens nach einem der Ansprüche 14 bis 19,
wobei die Funk-Transceiver-Stationen dafür ausgestaltet und eingerichtet ist, dass einem ersten virtuellen lokalen Netz zugeordnete Datenrahmen über ein erstes Funknetz gesendet werden und dass einem zweiten virtuellen lokalen Netz zugeordnete Datenrahmen über ein zweites Funknetz gesendet werden.

## Claims

1. Redundantly operable industrial communication system having
- at least a first and a second communication device (102, 202) redundantly connected to an industrial communication network and each having
- at least a first and a second communication network port,
- a signal processing unit connected to the first and second communication network ports and having a multiplexer unit for the parallel forwarding of data frames that are to be sent to the two communication network ports and a redundancy handling unit for processing data frames received from the two communication network ports, wherein the redundancy handling unit comprises a filter unit configured and set up for detection of received redundant data frames (11, 12),
- at least a first and a second network infrastructure device (103, 203) associated with the industrial communication network and each having
- a plurality of communication network ports,
- a coupling element connecting the communication network ports to one another,
wherein
- the first communication device (102) is redundantly connected, by means of its first and second communication network ports, to the first network infrastructure device (103),
- the second communication device (202) is redundantly connected, by means of its first and second communication network ports, to the second network infrastructure device (203),
- the first and second communication devices and/or the first and second network infrastructure devices are configured and set up so that data frames transmitted from the first communication network port of the first and second communication devices to the respective network infrastructure device are associated with a first virtual local area network and that data frames transmitted from the second communication network port of the first and second communication devices to the respective network infrastructure device are associated with a second virtual local area network,
- the first and second network infrastructure devices each have at least a first and a second radio transceiver station (131-132, 231-232) connected to them,
- the radio transceiver stations and/or the network infrastructure devices are configured and set up so that data frames associated with the first virtual local area network are sent by means of the respective first radio transceiver station via a first radio network and that data frames associated with the second virtual local area network are sent by means of the respective second radio transceiver station via a second radio network,
- in which the first and second radio transceiver stations are configured and set up by means of coordinated send queue management so that the first and second radio transceiver stations connected to the same network infrastructure device coordinate their sequences for data frames to be sent such that the two radio transceiver stations never send data frames to the same destination MAC address at the same time.

2. Communication system according to Claim 1,
in which data frames that are redundant with respect to one another are **characterized by** a standard sequence number, and in which the signal processing units of the first and second communication devices are configured and set up for allocation of a sequence number to a data frame that is to be transmitted redundantly.

3. Communication system according to Claim 2,
in which the first and second radio transceiver stations are configured and set up so that successful reception of a data frame sent via the first or second radio network results in the receiver end transmitting a confirmation message (21) to a radio transceiver station at the transmitter end.

4. Communication system according to Claim 3,
in which the radio transceiver stations and/or the network infrastructure devices are configured and set up so that sending of a redundant data frame with a sequence number associated with a confirmation message received at the transmitter end is prevented.

5. Communication system according to one of Claims 1 to 4,
in which data frames to be transmitted redundantly are transmitted in accordance with High-availability Seamless Redundancy and/or in accordance with Parallel Redundancy Protocol.

6. Communication system according to Claim 5,
in which the first and second communication devices are an HSR and/or PRP RedBox.

7. Communication system according to Claim 6,
in which the first and second communication devices each connect a singly connected communication device to the industrial communication network.

8. Communication system according to one of Claims 1 to 7,
in which the coupling element of a network infrastructure device is a high-speed bus and/or a backplane switch having an associated controller.

9. Communication system according to one of Claims 1 to 8,
in which the first and second radio networks are a wireless local area network, a WiMAX, UMTS or LTE mobile radio network or another mobile radio network.

10. Communication system according to one of Claims 1 to 9,
in which the first and second radio networks are identifiable by means of a radio network identifier.

11. Communication system according to Claim 10,
in which the radio network identifier is a service set identifier.

12. Communication system according to one of Claims 1 to 11,
in which the first and second radio transceiver stations are each associated with at least the first and second radio networks.

13. Communication system according to one of Claims 1 to 12,
in which the first and second radio transceiver stations are configured and set up so that a sequence for data frames to be sent is stipulated on the basis of destination MAC addresses associated with the data frames to be sent, wherein the sequence is stipulated within data frames to be sent to a selected destination MAC address by means of the order in which said data frames are received.

14. Method for the redundant operation of an industrial communication system, in which
- at least a first and a second communication device are redundantly connected to an industrial communication network, wherein the first and second communication devices each have
- at least a first and a second communication network port and
- a signal processing unit connected to the first and second communication network ports that forwards data frames to be sent to the two communication network ports in parallel and detects redundant data frames received from the two communication network ports,
- at least a first and a second network infrastructure device associated with the industrial communication network are provided that each have
- a plurality of communication network ports and
- a coupling element connecting the communication network ports to one another,
wherein
- the first communication device is redundantly connected, by means of its first and second communication network ports, to the first network infrastructure device,
- the second communication device is redundantly connected, by means of its first and second communication network ports, to the second network infrastructure device,
**characterized in that**
- data frames transmitted from the first communication network port of the first and second communication devices to the respective network infrastructure device are associated with a first virtual local area network and data frames transmitted from the second communication network port of the first and second communication devices to the respective network infrastructure device are associated with a second virtual local area network,
- the first and second network infrastructure devices each have at least a first and a second radio transceiver station connected to them,
- data frames associated with the first virtual local area network are sent by means of the respective first radio transceiver station via a first radio network and data frames associated with the second virtual local area network are sent by means of the respective second radio transceiver station via a second radio network,
- the first and second radio transceiver stations connected to the same network infrastructure device coordinate their sequences for data frames to be sent by means of send queue management such that the two radio transceiver stations never send data frames to the same destination MAC address at the same time.

15. Method according to Claim 14,
in which data frames that are redundant with respect to one another are **characterized by** a standard sequence number and in which the signal processing units of the first and second communication devices allocate a sequence number to a data frame that is to be transmitted redundantly.

16. Method according to Claim 15,
in which the first and second radio transceiver stations, on successful reception of a data frame sent via the first or second radio network, use the receiver end to transmit a confirmation message to a radio transceiver station at the transmitter end.

17. Method according to Claim 16,
in which the radio transceiver stations and/or the network infrastructure devices prevent sending of a redundant data frame with a sequence number associated with a confirmation message received at the transmitter end.

18. Method according to one of Claims 14 to 17,
in which data frames to be transmitted redundantly are transmitted in accordance with High-Availability Seamless Redundancy and/or in accordance with Parallel Redundancy Protocol.

19. Method according to one of Claims 14 to 18,
in which the first and second radio transceiver stations stipulate a sequence for data frames to be sent on the basis of destination MAC addresses associated with the data frames to be sent, wherein the sequence is stipulated within data frames to be sent to a selected destination MAC address by means of the order in which said data frames are received.

20. Radio transceiver station for performing a method according to one of Claims 14 to 19,
wherein the radio transceiver station is configured and set up so that data frames associated with a first virtual local area network are sent via a first radio network and that data frames associated with a second virtual local area network are sent via a second radio network.

## Revendications

1. Système de communication industriel pouvant fonctionner de manière redondante et comprenant
- au moins un premier et un deuxième appareils (102, 202) de communication rattachés de manière redondante à un réseau de communication industriel et ayant chacun
- au moins un premier et un deuxième accès au réseau de communication,
- une unité de traitement du signal, qui est reliée au premier et au deuxième accès au réseau de communication et qui a une unité de multiplexeur pour l'acheminement en parallèle de trames de données à envoyer aux deux accès au réseau de communication et une unité de traitement de redondance pour traiter des trames de données reçues des deux accès au réseau de communication, l'unité de traitement de redondance comprenant une unité de filtrage conformée et conçue pour détecter des trames (11, 12) de données redondantes reçues,
- au moins un premier et un deuxième appareils (103, 203) d'infrastructure de réseau associés au réseau de communication industriel et ayant chacun
- une pluralité d'accès au réseau de communication,
- un élément de couplage reliant entre eux des accès au réseau de communication,
dans lequel
- le premier appareil (102) de communication est raccordé de manière redondante au premier appareil (103) d'infrastructure de réseau par son premier et son deuxième accès au réseau de communication,
- le deuxième appareil (202) de communication est raccordé de manière redondante au deuxième appareil (203) d'infrastructure de réseau par son premier et son deuxième accès au réseau de communication,
**caractérisé en ce que**
- le premier et le deuxième appareils de communication et/ou le premier et le deuxième appareils d'infrastructure de réseau sont conformés et conçus pour associer un premier réseau local virtuel des trames de données transmises du premier accès au réseau de communication du premier et du deuxième appareils de communication à l'appareil d'infrastructure de réseau respectif et pour associer à un deuxième réseau local virtuel des trames de données transmises du deuxième accès au réseau de communication du premier et du deuxième appareils de communication à l'appareil d'infrastructure de réseau respectif,
- au moins une première et une deuxième stations (131-132, 231-232) d'émission-réception radio sont raccordées chacune au premier et au deuxième appareils d'infrastructure de réseau,
- les stations d'émission-réception radio et/ou les appareils d'infrastructures de réseau sont conformés et conçus pour envoyer des trames de données associées au premier réseau local virtuel au moyen de la première station d'émission-réception radio respective par un premier réseau radio et des trames de données associées au deuxième réseau local virtuel au moyen de la deuxième station d'émission-réception radio respective par un deuxième réseau radio,
- dans lequel les première et deuxième stations d'émission-réception radio sont conformées et conçues par une gestion de queue d'émission coordonnée pour que les première et deuxième stations d'émission-réception radio raccordées au même appareil d'infrastructure de réseau soient coordonnées suivant leur ordre pour des trames de données à envoyer, de manière à ce que deux stations d'émission-réception radio n'envoient des trames de données jamais en même temps à la même MAC cible.

2. Système de communication suivant la revendication 1,
dans lequel des trames de données redondantes l'une par rapport à l'autre sont **caractérisées par** un numéro de séquence unitaire et dans lequel les unités de traitement du signal du premier et du deuxième appareils de communication sont conformées et conçues pour une attribution d'un numéro de séquence à une trame de données à transmettre de manière redondante.

3. Système de communication suivant la revendication 2,
dans lequel les première et deuxième stations d'émission-réception radio sont conformées et conçues de manière à ce que, lors d'une réception réussie d'une trame de données à envoyer par le premier et le deuxième réseaux radio, il soit transmis, du côté réception, un message (21) de confirmation à une station d'émission-réception radio du côté émission.

4. Système de communication suivant la revendication 3,
dans lequel les stations d'émission-réception radio et/ou les appareils d'infrastructure de réseau sont conformés et conçus de manière à supprimer un envoi d'une trame de données redondantes ayant un numéro de séquence, qui est associé à un message de confirmation reçu du côté émission.

5. Système de communication suivant l'une des revendications 1 à 4,
dans lequel une transmission de trames de données à transmettre de manière redondante s'effectue conformément à High-availability Seamless Redundancy et/ou conformément à Parallel Protocol.

6. Système de communication suivant la revendication 5,
dans lequel le premier et le deuxième appareils de communication sont un HSR-Redbox et/ou un PRP-Redbox.

7. Système de communication suivant la revendication 6,
dans lequel, un appareil de communication rattaché simplement est relié au réseau de communication industriel par le premier et le deuxième appareils de communication, respectivement.

8. Système de communication suivant l'une des revendications 1 à 7,
dans lequel l'élément de couplage d'un appareil d'infrastructure de réseau est un bus à grande vitesse et/ou un Backplane Switch à dispositif de commande associé.

9. Système de communication suivant l'une des revendications 1 à 8,
dans lequel le premier et le deuxième réseaux radio sont un Wireless Local Area Network, un réseau de téléphonie mobile WIMAX, un réseau de téléphonie mobile UMTS, un réseau de téléphonie mobile LTE ou un autre réseau de téléphonie mobile.

10. Système de communication suivant l'une des revendications 1 à 9,
dans lequel le premier et le deuxième réseaux radio peuvent être identifiés au moyen d'une caractérisation de réseau radio.

11. Système de communication suivant la revendication 10,
dans lequel la caractérisation de réseau radio est un service Set Identifier.

12. Système de communication suivant l'une des revendications 1 à 11,
dans lequel la première et la deuxième stations d'émission-réception radio sont associées chacune au moins au premier et au deuxième réseaux radio.

13. Système de communication suivant l'une des revendications 1 à 12,
dans lequel la première et la deuxième stations d'émission-réception radio sont conformées et conçues de manière à ce qu'une séquence pour des trames de données à envoyer soit fixée à l'aide des adresses MAC cible associées aux trames de données à envoyer, la séquence dans une trame de données à envoyer à une adresse MAC cible MAC cible sélectionnée étant fixée par son ordre d'entrée.

14. Procédé pour faire fonctionner de manière redondante un système de communication industriel, dans lequel
- on rattache au moins un premier et un deuxième appareils de communication de manière redondante à un réseau de communication industriel, le premier et le deuxième appareils de communication ayant chacun
- au moins un premier et un deuxième accès au réseau de communication et
- une unité de traitement du signal, qui est reliée au premier et au deuxième accès au réseau de communication, qui achemine en parallèle les trames de données à envoyer aux deux accès au réseau de communication et qui détecte des trames de données redondantes reçues des deux accès au réseau de communication,
- il est prévu au moins un premier et un deuxième appareils d'infrastructure de réseau associés au réseau de communication industriel, qui ont chacun
- une pluralité d'accès au réseau de communication et
- un élément de couplage reliant entre eux les accès au réseau de communication,
dans lequel
- le premier appareil de communication est relié de manière redondante au premier appareil d'infrastructure de réseau par son premier et son deuxième accès au réseau de communication,
- le deuxième appareil de communication est relié de manière redondante au deuxième appareil d'infrastructure de réseau par son premier et son deuxième accès au réseau de communication,
**caractérisé en ce que**
- on associe des trames de données transmises du premier accès au réseau de communication du premier et du deuxième appareils de communication à l'appareil d'infrastructure de réseau respectif à un premier réseau local virtuel et des trames de données transmises du deuxième accès au réseau de communication du premier et du deuxième appareil de communication à l'appareil d'infrastructure de réseau respectif à un deuxième réseau local virtuel,
- respectivement une première et une deuxième stations d'émission-réception radio sont raccordées au premier et au deuxième appareils d'infrastructure de réseau,
- on envoie des trames de données associées au premier réseau local virtuel au moyen de la première station d'émission-réception radio par un premier réseau radio et des trames de données associés au deuxième réseau local virtuel au moyen de la deuxième station d'émission-réception radio par un deuxième réseau radio,
- les première et deuxième stations radio, qui sont raccordées au même appareil d'infrastructure de réseau, coordonnent leur ordre pour des trames de données à envoyer par une gestion de queue d'envoi, de manière à ce les deux stations d'émission-réception radio n'envoient des trames de données jamais en même temps à la même adresse MAC cible.

15. Procédé suivant la revendication 14,
dans lequel on caractérise des trames de données redondantes les unes par rapport aux autres par un numéro de séquence unitaire et dans lequel les unités de traitement du signal du premier et du deuxième appareils de communication attribuent un numéro de séquence à une trame de données à transmettre de manière redondante.

16. Procédé suivant la revendication 15,
dans lequel les première et deuxième stations d'émission-réception radio transmettent, lorsque la réception d'une trame de données envoyée par le premier ou le deuxième réseau radio est réussie, du côté de la réception, un message de confirmation à une station d'émission-réception radio du côté de l'émission.

17. Procédé suivant la revendication 16,
dans lequel les stations d'émission-réception radio et/ou les appareils d'infrastructure de réseau suppriment une émission d'une trame de données redondantes ayant un numéro de séquence, qui est affecté à un message de confirmation reçu du côté émission.

18. Procédé suivant l'une des revendications 14 à 17,
dans lequel on transmet des trames de données à transmettre de manière redondante conformément à High-availability Seamless Redundancy et/ou conformément à Parallel Protocol.

19. Procédé suivant l'une des revendications 14 à 18,
dans lequel les première et deuxième stations d'émission-réception radio fixent une séquence des trames de données à envoyer à l'aide des adresses MAC cible associées aux trames de données à envoyer, dans lequel on fixe la séquence dans une trame de données à envoyer à une adresse MAC cible sélectionnée par sa séquence d'entrée.

20. Station d'émission-réception radio pour effectuer un procédé suivant l'une des revendications 14 à 19,
dans laquelle la station d'émission-réception radio est conformée et conçue de manière à envoyer, par un premier réseau radio, des trames de données associées à un premier réseau local virtuel, et de manière à envoyer, par un deuxième réseau radio, des trames de données associées à un deuxième réseau local virtuel.
